# EUROPÄISCHE PATENTSCHRIFT

(11) **EP 1 118 564 B1**
(45) Veröffentlichungstag und Bekanntmachung des Hinweises auf die Patenterteilung: **02.05.2003**
(21) Anmeldenummer: 00811243.5
(22) Anmeldetag: 22.12.2000
(51) Int. Cl.: B65H 29/02, B65G 23/30, B65G 47/51

(54) **Fördervorrichtung**
Transport device
Dispositif de transport

(30) Priorität: 18.01.2000 CH 872000
(43) Veröffentlichungstag der Anmeldung: 25.07.2001
(73) Patentinhaber: Ferag AG, 8340 Hinwil (CH)
(72) Erfinder: Stauber, H. Ulrich, 8624 Grüt (CH)
(74) Vertreter: Frei, Alexandra Sarah

(56) Entgegenhaltungen:
- EP-A- 0 827 929
- WO-A-99/33731
- DE-A- 19 510 649
- US-A- 4 895 360
- US-A- 5 261 520
- US-A- 5 758 873

## Beschreibung

Die Erfindung liegt auf dem Gebiete der Fördertechnik und betrifft eine Fördervorrichtung gemäss dem Oberbegriff des unabhängigen Patentanspruchs. Die Vorrichtung dient zum Fördern von Stückgut, das heisst zum Fördern einer grossen Anzahl von gleichen oder mindestens ähnlichen Gegenständen auf einer Förderstrecke, beispielsweise zu einer Bearbeitungsstelle, durch die Bearbeitungsstelle und weg von der Bearbeitungsstelle. Die Gegenstände, die beispielsweise Druckprodukte sind, werden bei dieser Förderung einzeln oder in kleinen Gruppen in einer definierten Lage gehalten.

Für eine gehaltene Förderung von Druckprodukten werden diese üblicherweise an einer im wesentlichen quer zur Förderrichtung ausgerichteten Kante einzeln gehalten und frei hängend gefördert. Der Vorteil dieser Förderart besteht darin, dass jedes Produkt seinen individuellen Platz im Förderstrom hat, dass die Produkte also jederzeit vereinzelt werden können, dass aber trotzdem die Produkteabstände relativ zur Produktegrösse klein sein können, was schon bei relativ niedrigen Geschwindigkeiten hohe Förderleistungen möglich macht.

Sollen Druckprodukte, die in einem derart dichten Förderstrom gefördert werden, während der Förderung auch bearbeitet werden, ist es vielfach notwendig, nicht nur ihre gegenseitige Lage vorübergehend zu verändern, sondern es müssen gegebenenfalls auch die Abstände zwischen den Druckprodukten mindestens vorübergehend vergrössert werden, damit die einzelnen Druckprodukte für die Bearbeitung genügend zugänglich sind.

Fördervorrichtungen für die genannten Förderaufgaben weisen beispielsweise eine Mehrzahl von Halteelementen auf, die mehr oder weniger unabhängig voneinander auf einer in sich geschlossenen Bahn umlaufend angetrieben werden, wobei ein Teil dieser Bahn als Förderstrecke ausgenützt wird und die Halteelemente auf dem Rest der Bahn zum Anfang der Förderstrecke zurückgeführt werden. Jedes der Halteelemente hat einen entlang einer Schiene rollend oder gleitend verfahrbaren Körper, an dem ein Greifer montiert ist. Die Greifer werden bei der Aufnahme eines Gegenstandes gesteuert geschlossen und bei der Abgabe des Gegenstandes gesteuert geöffnet. Die verfahrbaren Roll- oder Gleitkörper sind vorteilhafterweise derart ausgestaltet, dass sie eng aneinander anschliessend, beispielsweise gestossen angetrieben werden können und dass sich in einem solchen Betrieb genau definierte, regelmässige Minimalabstände zwischen den Greifern, bzw. zwischen von den Greifern gehaltenen Gegenständen einstellen. Eine derartige Fördervorrichtung ist beispielsweise beschrieben in der Publikation WO-99/33731 (F475).

Sollen in einer derartigen Fördervorrichtung nicht nur genau definierte Minimalabstände sondern mindestens bereichsweise auch genau definierte andere Abstände, die grösser sind als der Minimalabstand, einstellbar sein, sind Mittel zur Einstellung der Abstände und gegebenenfalls einer entsprechenden Geschwindigkeit sowie Mittel zur Förderung unter Aufrechterhaltung der eingestellten Abstände und Geschwindigkeit vorzusehen. Ein Fördersystem mit derartigen Mitteln ist beispielsweise beschrieben in der Publikationen US-5261520 (Duke). Das beschriebene System weist voneinander unabhängige Halteelemente auf, die mit Hilfe von vier verschiedenen Antriebsorganen auf einer in sich geschlossenen Bahn bewegt werden. Auf einem ersten Bahnteil wirkt ein erstes endloses Antriebsorgan mit einer ersten Fördergeschwindigkeit und mit Fördernocken, die einen ersten Halteelementabstand definieren, auf einem zweiten Bahnteil wirkt ein zweites endloses Antriebsorgan mit einer zweiten, von der ersten verschiedenen Fördergeschwindigkeit und mit Fördernocken, die einen zweiten, vom ersten verschiedenen Halteelementabstand definieren. Zwischen den beiden Bahnteilen sind je ein Schraubenantrieb mit in Förderrichtung steigender bzw. abnehmender Schraubensteigung vorgesehen, die die Halteelemente vom einen Abstand auf den anderen, bzw. von der einen Fördergeschwindigkeit auf die andere bringen, das heisst von der einen Förderart in die andere eintakten. Eine solche Fördervorrichtung lässt sich auch ausbauen auf beliebig viele Bereiche mit verschiedenen Halteelementabständen, wobei für jeden Bereich mit einem bestimmten Halteelementabstand ein Antriebsorgan und zwischen je zwei derartigen Bereichen immer ein Mittel zum Eintakten oder Einstellen vorzusehen sind.

Auch Fördersysteme mit an einem umlaufenden Zugorgan montierten Greifern können für eine bereichsweise Greiferabstandsveränderung ausgerüstet sein. In der Publikation EP-0300170 ist eine derartige Vorrichtung beschrieben. Das Zugorgan ist eine Kette, die aus einzelnen Laschen besteht, wobei die Laschen durch Kettenbolzen gelenkig miteinander verbundenen sind. Die Kettenbolzen tragen Führungsrollen, mit denen sie abwechselnd in zwei Führungen geführt sind, derart, dass der Abstand zwischen den zwei Führungen die Winkel zwischen den Laschen bestimmt und damit auch die Länge der Laschen in Förderrichtung und den Abstand zwischen benachbarten Greifern, die an jedem vierten Kettenbolzen montiert sind. In Bereichen der Förderstrecke, in denen die Haltemittel grösstmögliche Abstände haben sollen, sind die Führungen derart angeordnet (kleinstmöglicher Abstand zwischen den Führungen), dass die Kette im wesentlichen gestreckt ist. In Förderstreckenbereichen, in denen die Haltemittel kleinstmögliche Abstände haben sollen, sind die Führungen derart angeordnet (grösstmöglicher Abstand zwischen den Führungen), dass die Kette maximal gestaucht ist.

Die Erfindung stellt sich nun die Aufgabe, eine Fördervorrichtung zur Förderung von Stückgut zu schaffen, wobei die Fördervorrichtung gemäss Erfindung in an sich bekannter Weise einen Schienenstrang und darauf im wesentlichen unabhängig voneinander verfahrbare Halteelemente mit Greifern aufweist, wobei die Halteelemente derart ausgestaltet sind, dass sich in gestossenem Betrieb ein regelmässiger, minimaler Abstand zwischen den Greifern einstellt, und wobei in mindestens einem Bereich (Einstellbereich) des Schienenstranges der Greiferabstand gegenüber dem Minimalabstand in genau definierter Art vergrössert wird. Die erfindungsgemässe Vorrichtung soll gegenüber entsprechenden Vorrichtungen gemäss dem Stande der Technik einfacher sein und soll möglichst uneingeschränkt einsetzbar sein. Ferner soll die erfindungsgemässe Vorrichtung es erlauben, in ebenfalls einfacher Art, in einem Einstellbereich eine bestimmte Abstandsvergrösserung aus einer Mehrzahl von möglichen Abstandsvergrösserungen zu wählen und/oder die Abstandsvergrösserung wahlweise zu aktivieren oder zu desaktivieren.

Diese Aufgabe wird gelöst durch die Fördervorrichtung, wie sie im unabhängigen Anspruch definiert ist. Die abhängigen Ansprüche definieren bevorzugte Ausführungsformen der erfindungsgemässen Fördervorrichtung.

Die erfindungsgemässe Fördervorrichtung weist einen Schienenstrang und darauf unabhängig voneinander verfahrbare Halteelemente auf, sowie mindestens einen Antrieb, mit dem die Halteelemente dicht aneinander gereiht gegen einen Einstellbereich und vorteilhafterweise wiederum dicht aneinander gereiht vom Einstellbereich weg gefördert werden, wobei gegebenenfalls die Schwerkraft als Antrieb ausgenützt werden kann. Ferner weist die Vorrichtung in diesem Einstellbereich als Mittel zur definierten Vergrösserung der Abstände zwischen den Halteelementen eine endlos umlaufende, stauchbare Einstellkette auf, die an die Halteelemente angepasst ist und die derart angeordnet ist, dass ein Teil ihrer Umlaufbahn parallel zum Schienenstrang verläuft und die Kette mit Halteelementen auf dem Schienenstrang im Eingriff ist.

Ferner sind Mittel vorgesehen, die den örtlichen Stauchgrad der Einstellkette in diesem Teil der Umlaufbahn derart definieren, dass der Stauchgrad von einem dem Minimalabstand der Halteelemente entsprechenden Wert vorübergehend auf einen dem einzustellenden vergrösserten Halteelement-Abstand entspricht.

Die mit Minimalabständen zugeförderten Halteelemente kommen in Eingriff mit der Einstellkette, die an der Eingriffsstelle einen dem Minimalabstand angepassten Stauchzustand aufweist. Während die Halteelemente mit der Einstellkette im Eingriff weitergefördert werden, vermindert sich die Stauchung, das heisst, wird die Einstellkette gespreizt, sodass die Halteelemente auseinander geschoben werden. Durch den Einstellbereich entspricht der Strauchgrad dem vorgegebenen, vergrösserten Halteelement-Abstand und wird konstant gehalten. Nach dem Einstellbereich erhöht sich der Stauchgrad der Einstellkette wieder, bis er dem Minimalabstand der Halteelemente wieder entspricht. Dann werden die Halteelemente aus dem Eingriff mit der Einstellkette entlassen.

Während Halteelemente und Einstellkette miteinander im Eingriff sind, wird die Einstellkette beispielsweise durch die Halteelemente (beispielsweise gestossen) angetrieben. Selbstverständlich ist es auch möglich, die Halteelemente über die Einstellkette anzutreiben. Ferner ist es möglich, dass sowohl Kette als auch Halteelemente mit einer gleichen Geschwindigkeit angetrieben werden.

Die stauchbare Einstellkette weist beispielsweise gelenkig miteinander verbundene Glieder auf, die derart ausgestaltet sind, dass die Kette harmonikaartig gestaucht werden kann. Die Mittel zur Einstellung des Stauchgrades sind beispielsweise Steuerrollen, die an den Kettengliedern oder an den Gliedgelenken angeordnet sind, und zwei stationäre Kulissen, an denen alternierende Steuerrollen abrollen, wobei der Abstand zwischen den Kulissen den Stauchgrad vorgibt.

Für eine wahlweise Einstellung auf verschiedene, vergrösserte Halteelementabstände sind die Mittel zum Einstellen des Stauchgrades der Einstellkette einstellbar zu gestalten und sind Mittel vorzusehen zur Kompensation einer Veränderung der Länge der Einstellkette, die durch eine Stauchgradveränderung entsteht. Für eine wahlweise Aktivierung/Deaktivierung der Abstandsvergrösserung können dieselben Mittel wie für eine wahlweise Einstellung verwendet werden oder kann die Einstellkette derart verschiebbar angeordnet sein, dass der Eingriff mit den Halteelementen wahlweise aktiviert bzw. deaktiviert wird.

Beispielhafte Ausführungsformen und Anwendungen der erfindungsgemässen Fördervorrichtung werden anhand der folgenden Figuren detailliert beschrieben. Dabei zeigen:
- **Figur 1**: eine beispielhafte Ausführungsform der erfindungsgemässen Vorrichtung;
- **Figuren 2 und 3**: Halteelemente und Einstellkette der Ausführungsform gemäss Figur 1 (Fig. 2: Schnitt parallel zur Förderrichtung; Fig. 3: Schnitt quer zur Förderrichtung);
- **Figuren 4 und 5**: Halteelemente und Einstellkette einer weiteren, beispielhaften Ausführungsform der erfindungsgemässen Vorrichtung (Figur 4: Schnitt parallel zur Förderrichtung; Figur 5: Schnitt quer zur Förderrichtung);
- **Figur 6**: ein Anwendungsbeispiel für eine erfindungsgemässe Vorrichtung gemäss Fig. 1 bis 3 oder 4 bis 5;
- **Figuren 7 und 8**: eine Einstellkette mit Kompensationsmitteln (Fig. 7: ohne Stauchungsverringerung im Einstellbereich; Fig. 8: mit Stauchungsverringerung im Einstellbereich);
- **Figuren 9 und 10**: eine weitere Einstellkette mit Kompensationsmitteln (Fig. 9: mit Stauchungsverringerung im Einstellbereich; Fig. 10: ohne Stauchungsverringerung im Einstellbereich);
- **Figur 11**: eine weitere Einstellkette mit Kompensationsmitteln.

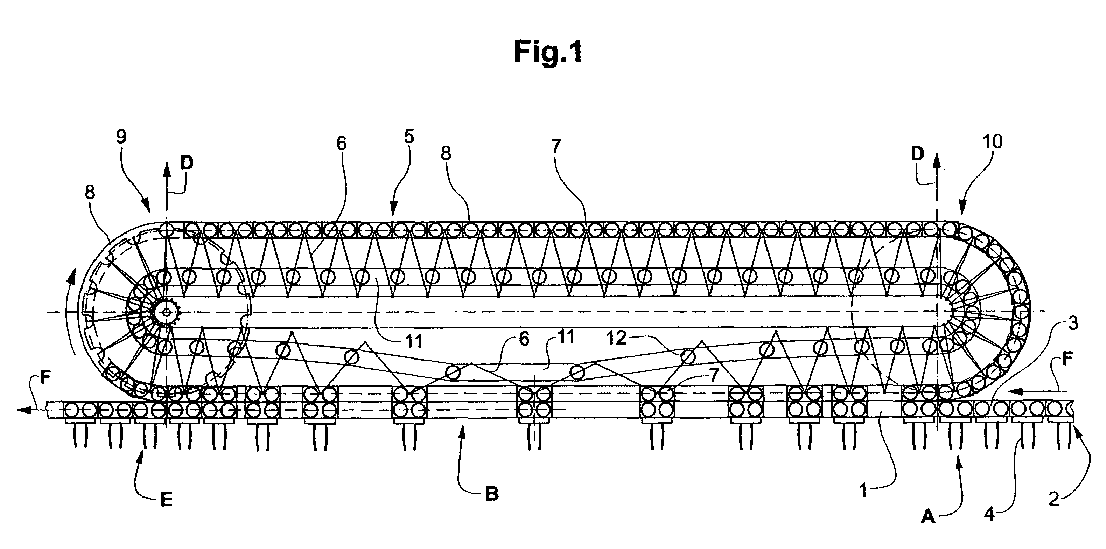

**Figur 1** zeigt den Einstellbereich einer beispielhaften Ausführungsform der erfindungsgemässen Vorrichtung. Diese weist einen Schienenstrang 1 und entlang des Schienenstranges 1 in Förderrichtung F verfahrbare Halteelemente 2 mit je einem Rollkörper 3 und einem am Rollkörper 3 angeordneten Greifer 4 auf. Die Halteelemente 2 werden beispielsweise einander stossend, das heisst mit Minimalabständen voneinander zugefördert mit einem geeigneten Antrieb, der nicht dargestellt ist.

Die Vorrichtung weist ferner eine endlos umlaufende, stauchbare Einstellkette 5 auf, die aus einer Mehrzahl von gelenkig miteinander verbundenen Kettengliedern 6 besteht. An jeder zweiten, gelenkigen Gliederverbindung weist die Kette 5 einen Kettenrollkörper 7 auf, der ähnlich ausgestaltet ist wie der Rollkörper 3 der Halteelemente 2. Die Kettenrollkörper 7 laufen in einer Umlaufführung 8, die zusammen mit zwei Kettenrädern 9 und 10 die Umlaufbahn der Einstellkette 5 definieren. Mindestens ein Teil dieser Umlaufbahn verläuft parallel zum Schienenstrang 1, in dem die Halteelemente 2 verfahrbar sind. Dieser Teil umfasst den Einstellbereich B.

Der Stauchgrad der Einstellkette 5 wird definiert durch eine Kulisse 11, deren Abstand zur Umlaufführung 8 der Kettenrollkörper 7 im Einstellbereich B kleiner ist als in den anderen Bereichen der Umlaufbahn der Kette 5. In dieser Kulisse 11 laufen Steuerrollen 12, die im Bereiche derjenigen Gelenke der Kette 5 angeordnet sind, die mit den Gelenken mit den Kettenrollkörpern 7 alternieren.

Vorteilhafterweise sind die Einstellkette 5 und die Mittel zur Definition ihres Stauchgrades (11, 12) derart ausgelegt, dass die Kette 5 auf ihrer Umlaufbahn maximal gestaucht ist und die Stauchung nur im Einstellbereich B verringert ist. Die maximale Stauchung kann beispielsweise definiert sein durch die Kettenrollkörper 7 der Einstellkette 5, die bei maximaler Stauchung dicht aneinander liegen, wie dies in der Figur 1 im oberen Teil der Umlaufbahn der Einstellkette dargestellt ist. Wird die Einstellkette 5 gestossen betrieben, nimmt sie automatisch den Zustand maximaler Stauchung an, sodass in entsprechenden Bereichen ihrer Umlaufbahn die Kulisse 11 auch entfallen kann.

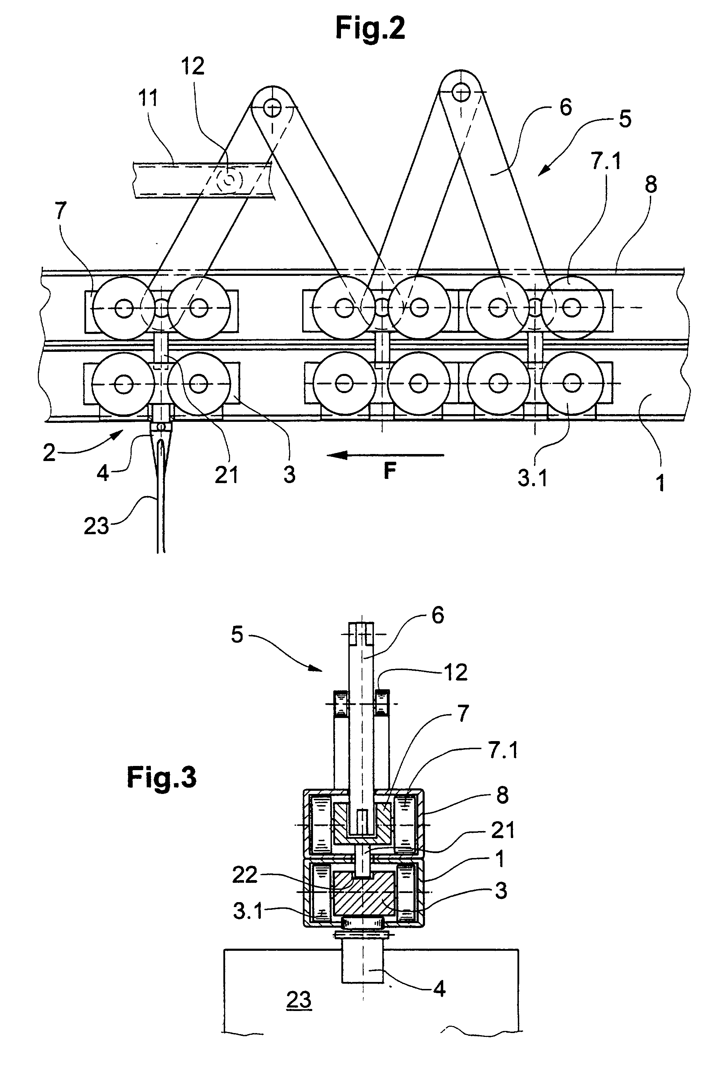

Wie anhand der Figuren 2 und 3 noch im Detail zu zeigen ist, kommen die Halteelemente 2 und die Einstellkette 5 an einer Eingriffstelle A miteinander in Eingriff und bleiben miteinander im Eingriff bis zu einer Entlassungsstelle E, wo die Umlaufbahn der Einstellkette 5 und der Schienenstrang 1 sich voneinander entfernen und dadurch der Eingriff gelöst wird. Zwischen der Eingriffstelle A und der Entlassungsstelle E verlaufen die Umlaufschiene 8 und der Schienenstrang 1 parallel zueinander und da ist auch der Einstellbereich B angeordnet, das heisst derjenige Bereich, in dem die Einstellkette 5 mittels der Kulisse 11 gespreizt gehalten wird und die Halteelemente 2 mit der Einstellkette 5 im Eingriff sind. Jenseits der Entlassungsstelle E werden die Halteelemente 2 wiederum beispielsweise mit minimalen Abständen voneinander weggefördert angetrieben durch einen geeigneten Antrieb, der ebenfalls nicht dargestellt ist.

Es ist möglich, die Einstellkette 5 und damit auch die Halteelemente 2 zwischen der Eingriffstelle A und der Entlassungsstelle E über das Umlenkrad 9 anzutreiben. Der Antrieb für die Zuförderung zur Eingriffstelle A und für die Wegförderung von der Entlassungsstelle E kann in diesem Falle beispielsweise durch die Schwerkraft übernommen werden, wenn der Schienenstrang in diesen Bereichen entsprechend in Förderrichtung sinkend angeordnet ist. Eine vorteilhafte Antriebsvariante besteht darin, die Halteelemente 2 durch weiter zugeförderte Halteelemente durch den Einstellbereich B zu stossen und die Einstellkette 5, die in diesem Falle beispielsweise passiv umläuft, mit zu stossen, wobei auch die Halteelemente jenseits der Entlassungsstelle E weiter gestossen werden. Es ist auch möglich, die Halteelemente 2 zu stossen und auch die Einstellkette 5 anzutreiben, wobei die beiden Antriebsgeschwindigkeiten genau aufeinander abzustimmen sind.

Soll in einer Vorrichtung, wie sie in der Figur 1 dargestellt ist, die Abstandsvergrösserung desaktivierbar sein, kann die Umlaufbahn der Einstellkette 5 beispielsweise quer zur Förderrichtung derart verschiebbar angeordnet sein, dass sie für eine Desaktivierung vom Schienenstrang 1 distanziert werden kann (Pfeile D). Wenn die Einstellkette 5 in dieser distanzierten Position positioniert ist, ist kein Eingriff der Kette 5 in Halteelementen 2 mehr möglich und die Halteelemente 2 werden mit unveränderten, minimalen Abständen durch den Einstellbereich gestossen.

**Figuren 2 und 3** zeigen in einem grösseren Massstab Einstellkette 5 und Halteelemente 2 der erfindungsgemässen Vorrichtung gemäss Figur 1, die miteinander im Eingriff sind. Figur 2 zeigt die Vorrichtung im Schnitt parallel zur Förderrichtung F, Figur 3 im Schnitt quer zur Förderrichtung F. Die dargestellte Stelle befindet sich in Förderrichtung F nach der Eingriffstelle, so dass Einstellkette 5 und Halteelemente 2 miteinander im Eingriff stehen, und unmittelbar vor dem Einstellbereich B, das heisst an der Stelle, wo die Spreizung der Einstellkette 5 beginnt. Gleiche Teile sind mit gleichen Bezugsziffern bezeichnet wie in Figur 1.

Die Einstellkette 5 weist an jeder zweiten gelenkigen Gliederverbindung einen Kettenrollkörper 7 auf, der mit einer Gruppe von Führungsrollen 7.1 versehen ist. Die Kettenrollkörper 7 tragen ferner je einen Mitnehmer 21. Die Führungsrollen 7.1 laufen in der Umlaufführung 8, die in diesem Bereich parallel zum Schienenstrang 1 verläuft und unmittelbar an diesem anliegend, derart, dass die Mitnehmer 21 in entsprechende Ausnehmungen 22 der Halteelemente 2 eingreifen. Mitnehmer 21 und Ausnehmungen 22 können auch vertauscht oder durch andere kooperierende Mitnahmemittel ersetzt werden.

Die Rollkörper 3 der Halteelemente 2, an denen die die Gegenstände 23 haltenden Greifer 4 angeordnet sind und die mittels Führungsrollen 3.1 entlang des Schienenstranges 1 geführt sind, weisen in Förderrichtung F vorteilhafterweise eine Länge auf, die der Länge der Kettenrollkörper 7 entspricht. Dadurch ergeben sich gleiche minimale Abstände und eine einfache Synchronisation zwischen Halteelementen 2 und Einstellkette 5 an der Eingreifstelle.

Wie bereits im Zusammenhang mit der Figur 1 angetönt, ist für den gespreizten Zustand der Einstellkette 5 (links in der Figur 2) eine Führung oder Kulisse 11 für die Steuerrollen 12 notwendig, um den Stauchgrad der Kette 5 zu definieren. Bei gestossenem Betrieb wird die Stauchung durch die Länge der Kettenrollkörper 3 in Förderrichtung F begrenzt (maximaler Stauchgrad, rechts in der Figur 2), so dass die Kulisse 11 entfallen kann.

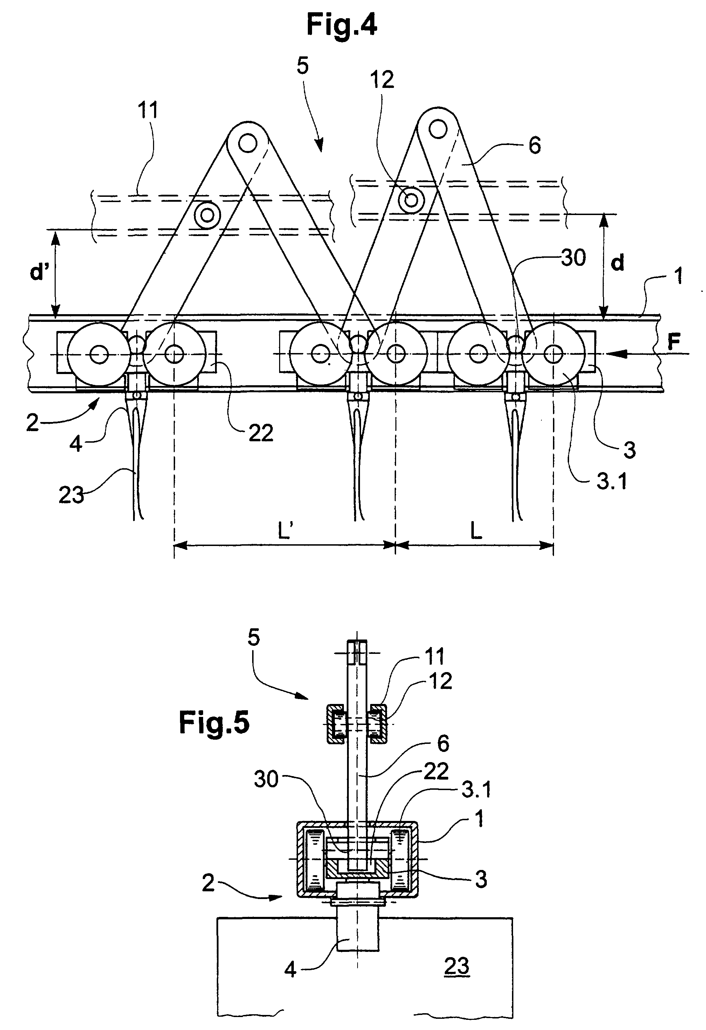

**Figuren 4 und 5** zeigen eine weitere, beispielhafte Ausführungsform einer Einstellkette 5, die mit Halteelementen 2 im Eingriff ist. Die Darstellungsart ist dieselbe wie in Figuren 2 und 3. Die Einstellkette 5 weist in diesem Falle keine Umlaufführung und keine Kettenrollkörper mit Mitnehmern auf sondern es sind die Gelenkbolzen 30 jeder zweiten gelenkigen Verbindung zwischen Kettengliedern 6, die in entsprechende Ausnehmungen 22 der Rollkörper 3 der Halteelemente 2 eingreifen. Dies bedeutet, dass der Schienenstrang 1 die Funktion der Umlaufführung übernimmt.

Aus der Figur 4 ist deutlich ersichtlich, wie der Abstand d bzw. d' zwischen der Kulisse 11 und dem Schienenstrang 1 die Abstände L bzw. L' zwischen den Haltelementen 2 bestimmt, die im wesentlichen den Abständen zwischen flachen, durch die Greifer 4 gehalten geförderten Gegenständen 23 entsprechen. Der Abstand d zwischen Kulisse 11 und Schienenstrang 1 definiert den kleinstmöglichen Halteelement-Abstand L (höchstmöglicher Stauchgrad der Einstellkette) und Abstand d' den einzustellenden, gegenüber dem Minimalabstand vergrösserten Abstand L'.

Während in der Ausführungsform gemäss Figuren 2 und 3 die Kulisse 11 für gestossenen Betrieb der Einstellkette 5 und für maximale Stauchung entfallen kann, ist diese für die Ausführungsform gemäss Figuren 4 und 5 mindestens im Bereiche der Eingreifstelle notwendig, um den in die Halteelemente 2 eingreifenden Gelenkbolzen 30 einen auf die Halteelemente 2 abgestimmten Abstand zu geben. In Bereichen, in denen die Einstellkette 5 mit den Halteelementen 2 im Eingriff ist und in denen der Abstand zwischen den Halteelementen 2 minimal sein soll, kann dann die Kulisse wieder entfallen, da (gestossener Betrieb vorausgesetzt) die Rollkörper 3 der Halteelemente 2 den Stauchgrad bestimmen.

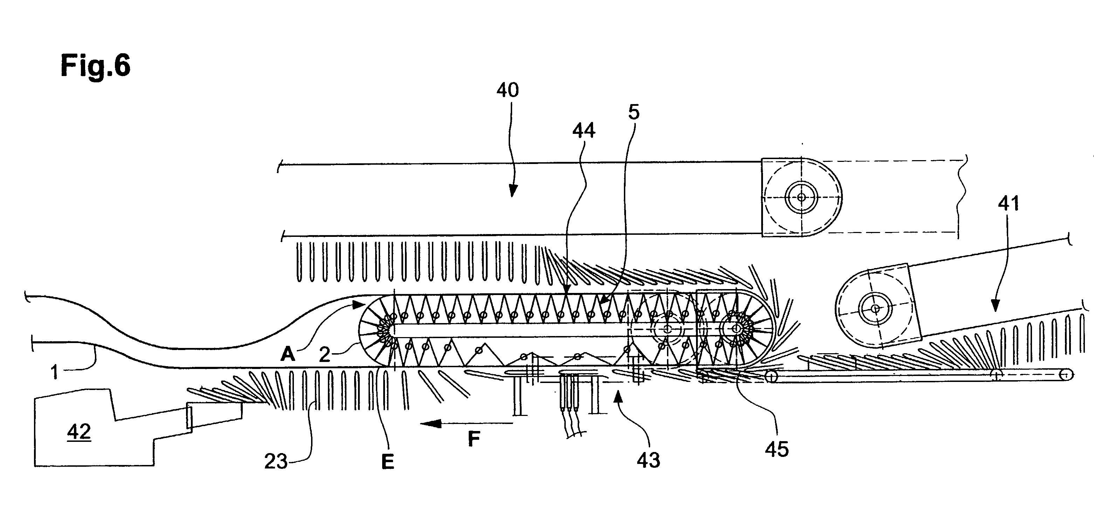

**Figur 6** zeigt eine beispielhafte Anwendung der erfindungsgemässen Vorrichtung, wie sie im Zusammenhang mit den Figuren 1 bis 5 beschrieben ist. Es handelt sich um ein System zur Förderung von Druckprodukten, die wahlweise von zwei Zuführungssystemen 40 und 41 (z.B. Fördersysteme mit Greiferketten) beispielsweise zu einer Packetiervorrichtung 42 zugeführt werden, wobei zwischen Zuführung 40 oder 41 und Packetierung 42 wahlweise eine Einzelbearbeitung 43 (beispielsweise eine Adressierung) zuschaltbar ist. Wenn die Bearbeitung zugeschaltet ist, werden die Produkteabstände dafür vergrössert. Gegebenenfalls werden für verschiedene Produkteformate verschiedene, vergrösserte Abstände eingestellt. Bei nicht zugeschalteter Bearbeitung ist es vorteilhaft, die Produkteabstände auf dem Minimum zu belassen (keine Abstandsvergrösserung), derart, dass auch die Fördergeschwindigkeit nicht vergrössert werden muss.

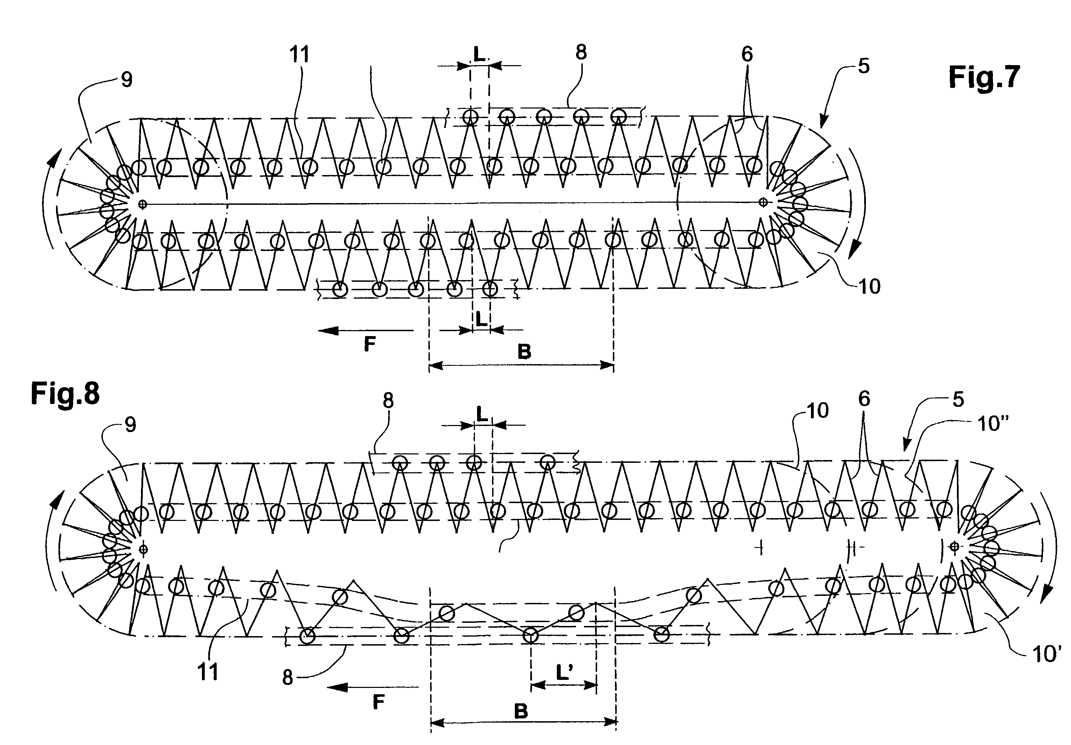

Die dargestellte, erfindungsgemässe Fördervorrichtung entspricht im wesentlichen der Vorrichtung gemäss Figur 1, wobei aber für die Desaktivierung der Abstandsvergrösserung andere Mittel vorgesehen sind (siehe Figuren 7 und 8).

Die Halteelemente (nicht dargestellt), die entlang des Schienenstranges 1 verfahrbar sind, kommen an der Eingriffstelle A mit der Einstellkette 5 in Eingriff, übernehmen entweder an der ersten Übernahmestelle 44 vom Zufördersystem 40 oder an der zweiten Übernahmestelle 45 vom Zufördersystem 41 Druckprodukte, werden, wenn eine Einzelbearbeitung vorgenommen werden soll, auf vergrösserte Abstände eingestellt und werden nach der Einzelbearbeitung an der Entlassungsstelle E aus dem Eingriff entlassen. Wenn die Einzelbearbeitung nicht vorgenommen werden soll, wird die Abstandseinstellung desaktiviert durch Vermeidung eines Eingriffes zwischen Halteelementen und Einstellkette, wie dies beispielsweise im Zusammenhang mit der Figur 1 beschrieben wurde, oder die Einstellkette 5 wird ohne Spreizung durch den Einstellbereich geführt (siehe folgende Figuren).

**Figuren 7 bis 11** illustrieren verschiedene Methoden, mit denen der im Einstellbereich einer erfindungsgemässen Vorrichtung einzustellende Halteelementabstand je nach Anwendungsfall wahlweise verstellt werden kann oder die Abstandsvergrösserung wahlweise aktiviert oder desaktiviert werden kann, wobei nicht wie im Zusammenhang mit der Figur 1 beschrieben der Eingriff zwischen Halteelementen und Einstellkette durch Verschiebung der Umlaufbahn der Einstellkette wahlweise unterbunden wird, sondern indem die Einstellkette wahlweise verschieden gespreizt bzw. gar nicht gespreizt wird. Jede der Figuren zeigt sehr schematisch eine Einstellkette 5, die auf einer in sich geschlossenen Umlaufbahn umläuft, wobei die Einstellkette 5 in einem Einstellbereich B gesteuert stauchbar bzw. spreizbar ist, wie dies im Zusammenhang mit den Figuren 1 bis 5 beschrieben wurde. Eine wahlweise Spreizung der Einstellkette ist aber nur möglich, wenn die durch verschiedene Spreizungen verschiedenen Kettenlängen in anderen Bereichen kompensiert oder die Umlaufbahn der Kette entsprechend veränderbar ist.

Figuren 7 bis 11 zeigen Einstellketten 5, deren Umlaufbahn durch je zwei Kettenräder 9 und 10 definiert ist, wobei die Kettenräder passiv umlaufend oder gegebenenfalls angetrieben sind und mit jeder zweiten gelenkigen Verbindung zwischen Kettengliedern 6 im Eingriff stehen. Zwischen den Kettenrädern 9 und 10 ist die Umlaufbahn der Einstellkette 5 im wesentlichen geradlinig. Die in den Figuren 7 bis 11 dargestellte, einfachste Form der Umlaufbahn einer Einstellkette 5 stellt für die Erfindung in keiner Weise eine Einschränkung dar. Die Umlaufbahn der Einstellkette 5 der erfindungsgemässen Vorrichtung kann beliebig lang sein und kann durch eine grössere oder kleinere Zahl von Umlenk/Antriebs-Rädern definiert sein. Femer kann sie zwischen Umlenk/Antriebs-Rädern durch entsprechend angeordnete Führungen 8 auch anders als geradlinig geführt sein.

Der in den Figuren 7 bis 11 untere Bahnbereich beinhaltet den Einstellbereich B, ist also die Strecke, auf der die Einstellkette mit nicht dargestellten Halteelementen im Eingriff steht.

**Figuren 7 und 8** zeigen eine Einstellkette 5 mit kompensatorischer Bahnlängenanpassung. Figur 7 zeigt die Einstellkette 5 in einem ersten Einstellungszustand, Figur 8 in einem zweiten Einstellungszustand, wobei im ersten Einstellungszustand die auf die Förderrichtung projizierte Länge L der Kettenglieder, bzw. der dadurch definierte Abstand zwischen mit der Kette im Eingriff stehenden Halteelementen auf der gesamten Umlaufbahn (inklusive Einstellbereich B) gleich sind und beispielsweise dem höchsten Stauchgrad entsprechen, und wobei im zweiten Einstellungszustand die projizierten Gliederlängen unverändert L sind ausser im Einstellbereich B, wo eine grössere projizierte Gliederlänge L' eingestellt ist.

Als Steuermittel für eine Veränderung des Einstellungszustandes dient die Führung oder Kulisse 11, die im ersten Einstellungszustand (Figur 1) durchwegs parallel zur Umlaufführung 8 (oder gegebenenfalls zu einem Schienenstrang 1, siehe Figuren 4 und 5) verläuft, im zweiten Einstellungszustand jedoch im Einstellbereiche B einen kleineren Abstand von dieser hat als in den restlichen Bahnbereichen. Die Kulisse 11 ist also im Einstellbereiche B und in den unmittelbar benachbarten Bereichen als einstellbares Steuermittel, das heisst entsprechend verschiebbar oder auswechselbar zu gestalten.

Die bei einem Übergang vom einen Einstellungszustand in den anderen Einstellungszustand durch die Stauchzustands-Veränderung im Einstellbereiche B bedingte Veränderung der Gesamtlänge der Einstellkette 5 wird kompensiert durch eine entsprechende Veränderung (Verlängerung oder Verkürzung) der Umlaufbahn, beispielsweise durch eine Verschiebung des einen Kettenrades 10 in eine mit 10' bezeichnete Stellung und gegebenenfalls durch eine entsprechende Verlängerung der Umlaufführung 8 und der Kulisse 11.

Bei einer Umstellung von einem Einstellungszustand zu einem anderen Einstellungszustand müssen auch die Anzahl der Glieder 6 je zwischen den Kettenrädern 9 und 10 angepasst werden (Figur 7: gleich viele Kettenglieder auf dem oberen und dem unteren Bahnteil; Figur 8: mehr Kettenglieder auf dem oberen Bahnteil als auf dem unteren Bahnteil). Diese Anpassung verläuft automatisch, wenn mindestens eines der Kettenräder ein passiv drehbares Umlenkrad ist oder mindestens für die Umstellung passiv drehbar gemacht wird.

Die Steuermittel und Kompensationsmittel, wie sie in der Vorrichtung gemäss Figuren 7 und 8 vorgesehen sind, erlauben eine Mehrzahl von Einstellungszuständen (Kettenrad-Stellungen 10, 10' und 10" in der Figur 8 strichpunktiert angedeutet). Mit einer entsprechend gesteuert deformierbaren Kulisse 11 im Einstellbereich B ist auch eine stufenlose Einstellung während dem Betrieb denkbar.

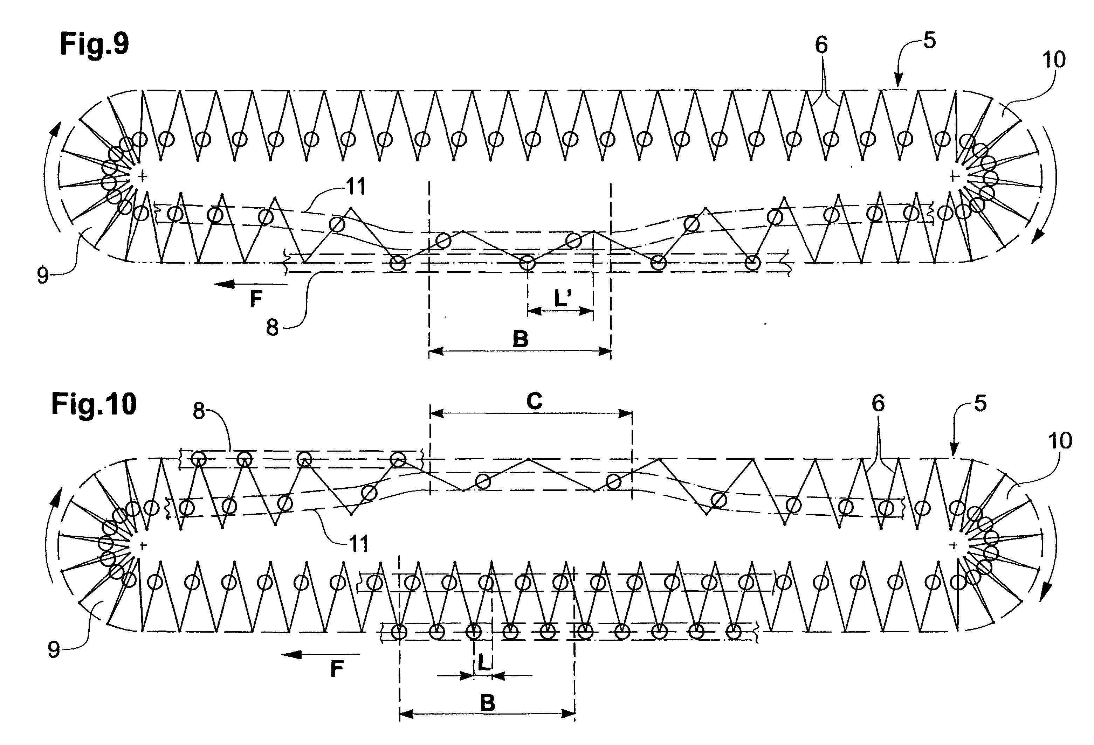

**Figuren 9 und 10** zeigen in derselben, schematischen Darstellungsweise wie die Figuren 7 und 8 wiederum zwei Einstellungszustände einer Einstellkette 5, welche Einstellungszustände sich durch die projizierten Gliederlängen L und L' im Einstellbereich B (Stauchzustand) unterscheiden. In diesem Falle wird die Stauchzustands-Änderung bzw. die dadurch bedingte Kettenlängen-Veränderung, die sich beim Übergang vom einen Einstellungszustand in den anderen Einstellungszustand ergibt, kompensiert durch eine entsprechende Stauchzustands-Änderung in einem weiteren Bahnbereich C (Kompensationsbereich), zum Beispiel, wie in der Figur 10 dargestellt, im oberen Bahnbereich. Für diesen Fall sind also die Steuermittel und die Kompensationsmittel im wesentlichen gleich und wirken in entgegengesetztem Sinne. Figuren 9 und 10 zeigen Steuer- und Kompensationsmittel in der Form von veränderbaren oder auswechselbaren Teilen der Kulisse 11, wie sie entsprechend als Steuermittel auch in den Figuren 7 und 8 dargestellt sind.

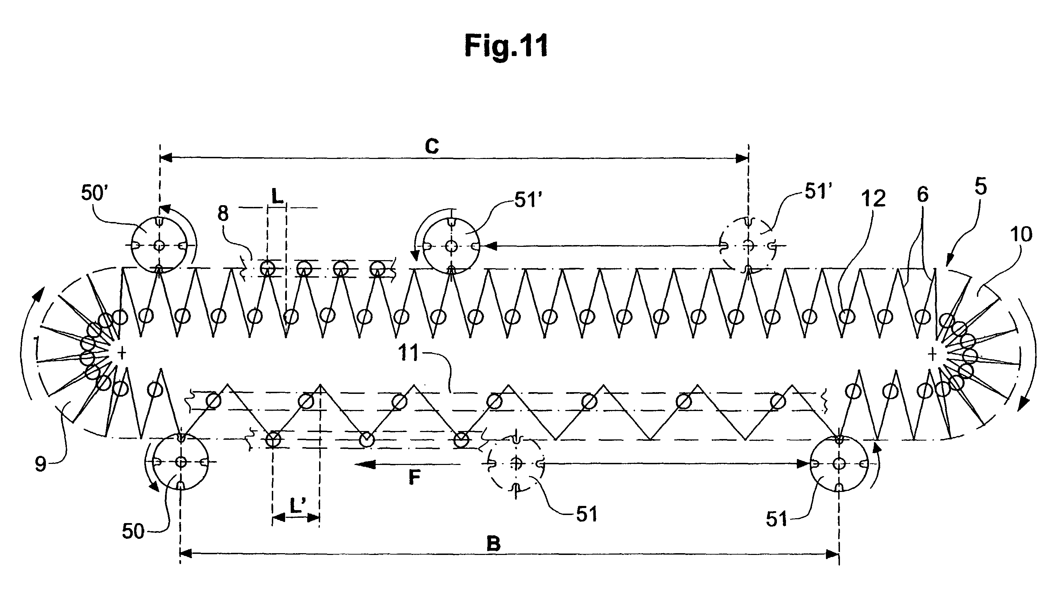

**Figur 11** stellt in derselben, schematischen Darstellungsweise wie Figuren 7 bis 10 eine weitere Ausführungsform von Steuermitteln und Kompensationsmitteln für eine Einstellkette 5 mit kompensatorischer Stauchzustands-Änderung dar. Sie weist wiederum einen Einstellbereich B auf, in dem der Stauchzustand der Einstellkette einstellbar ist, und einen Kompensationsbereich C, in dem die Einstellung des Einstellbereiches B ebenfalls durch eine Stauchzustands-Änderung kompensiert wird. Als Steuer- und Kompensationsmittel sind je ein Paar von angetriebenen Steuerrädern 50 und 51 für den Einstellbereich B und 50' und 51' für den Kompensationsbereich C vorgesehen, die mit der Einstellkette 5, beispielsweise an den in der Umlaufführung 8 laufenden gelenkigen Verbindungen der Kettenglieder 6 in Eingriff stehen. Die ersten Steuerräder 50 und 50' der beiden Steuerradpaare sind ortsfest angeordnet und definieren je ein Ende der beiden Bereiche B und C. Die beiden zweiten Steuerräder 51 und 51' sind entlang der Umlaufbahn verschiebbar angeordnet. Die beiden zweiten Steuerräder 51 und 51' sind in einer Position ausgezogen dargestellt und in einer weiteren Position strichpunktiert. Die ausgezogene Position entspricht der dargestellten Situation, in der die Gliederlängen im Einstellbereiche B auf die Länge L' eingestellt sind, während sie auf dem Rest der Bahn der Minimallänge L entspricht. Die strichpunktiert dargestellte Position der Steuerräder 51 und 51' entspricht einer Situation, in der die Gliederlängen im Einstellbereich B auf die Länge L eingestellt sind und die Gliederlängen im Kompensationsbereich C entsprechend verlängert sind.

Werden die beiden zweiten Steuerräder 51 und 51' in Pfeilrichtung von der strichpunktiert dargestellten Position in die ausgezogen dargestellte Position verschoben, wird die Gliederlänge im Einstellbereich B von L auf L' umgestellt. Offensichtlich sind unendlich viele Zwischenpositionen möglich, mit denen Gliederlängen zwischen L und L' kontinuierlich einstellbar sind.

Wenn die Bereiche B und C unmittelbar aneinander angrenzen, genügt ein einziges zweites Steuerrad, das die Funktionen der verschiebbaren Steuerräder 51 und 51' übernehmen kann. Die Antriebsgeschwindigkeit der Steuerräder 50, 50', 51 und 51' ist an eine übergeordnete Antriebsgeschwindigkeit der Einstellkette 5, beispielsweise an die Antriebsgeschwindigkeit des als Antriebsrad dienenden Kettenrades 9 angepasst. Das Antriebsrad 9 kann auch die Funktion der ersten Steuerräder 50 und/oder 50' übernehmen. In diesem Falle reichen die Bereiche B und C bis zu diesem Kettenrad 9. Das Kettenrad 10 ist ein passives Führungs- oder Umlenkrad oder ist mindestens für die Umstellung von einem Einstellungszustand in einen anderen Einstellungszustand in einen passiv drehenden Zustand schaltbar. Das Kettenrad 10 kann auch fehlen.

Die Kulisse 11 dient im Kompensationsbereich B zur Vergleichmässigung der Gliederabstände. Das entsprechende Stück dieser Kulisse 11 ist vorteilhafterweise lösbar und in gelöstem Zustand geführt verschiebbar. Während einer Umstellung wird das Stück Kulisse gelöst und durch die Führungsrollen 12 automatisch verschoben. Wenn die Gleichmässigkeit der Gliederlängen im Einstellbereiche B nicht wichtig und die Einstellkette 5 entsprechend angetrieben ist, kann auf die Führung der Führungsrollen 12 durch die Kulisse 11 verzichtet werden. Dasselbe gilt für den Kompensationsbereich C.

Für eine Kompensation durch Stauchzustands-Änderung in einem Kompensationsbereich C ist es keine Bedingung, dass die Bereiche B und C gleich lang sind und dass die darin vorgenommenen Stauchzustands-Änderungen entgegengesetzt gleich sind, wie dies in den Figuren 9 bis 11 dargestellt ist.

In den Figuren 7 bis 11 sind je ein Steuermittel zur Einstellung eines vorgegebenen Stauchzustandes der Einstellkette 5 im Einstellbereich B und ein Kompensationsmittel zur Kompensierung der durch die Stauchzustands-Änderung bedingte Längenveränderung der Kette dargestellt. Dabei ist die in den Figuren dargestellte Paarung von Steuermittel und Kompensationsmittel in keiner Weise bindend. Es ist also beispielsweise ohne weiteres vorstellbar, ein Steuerrollenpaar als Steuermittel, wie es in der Figur 11 dargestellt ist, mit einem Mittel zur Verlängerung der Umlaufbahn (Figuren 7 und 8) als Kompensationsmittel zu kombinieren.

## Patentansprüche

1. Fördervorrichtung zur gehaltenen Förderung von einzelnen Gegenständen (23) in einer Förderrichtung (F), welche Fördervorrichtung einen Schienenstrang (1) und eine Mehrzahl von entlang des Schienenstranges (1) voneinander im wesentlichen unabhängig verfahrbaren Halteelementen (2) aufweist, wobei die Halteelemente (2) derart ausgestaltet sind, dass sie in gestossenem Betrieb einen definierten Minimalabstand voneinander haben, **dadurch gekennzeichnet, dass** die Vorrichtung ferner eine auf einer Umlaufbahn endlos umlaufende Einstellkette (5) mit einem veränderbaren Stauchgrad aufweist, wobei die Umlaufbahn der Einstellkette (5) mindestens in einem Einstellbereich (B) parallel zum Schienenstrang (1) verläuft und die Einstellkette (5) mit entlang des Schienenstrangs (1) geförderten Halteelementen (2) im Eingriff ist und dass im Einstellbereich (B) ein Steuermittel zur örtlichen Verkleinerung des Stauchungsgrades der Einstellkette (5) vorgesehen ist.

2. Fördervorrichtung nach Anspruch 1, **dadurch gekennzeichnet, dass** die Einstellkette (5) gelenkig miteinander verbundene Kettenglieder (6) aufweist, wobei den gelenkigen Verbindungen der Kettenglieder (6) alternierend Führungsrollen (7.1) oder Führungsrollengruppen und Steuerrollen (12) zugeordnet sind und mindestens durch den Einstellbereich (B) die Führungsrollen (7.1) entlang einer Umlaufführung (8) und die Steuerrollen (12) entlang einer Kulisse (11) zur Steuerung des Stauchungsgrades der Einstellkette (5) geführt werden, und dass an den entlang der Umlaufführung (8) geführten gelenkigen Verbindungen Mitnahmemittelteile zur Mitnahme von Halteelementen (2) angeordnet sind.

3. Fördervorrichtung nach Anspruch 1, **dadurch gekennzeichnet, dass** die Einstellkette (5) gelenkig miteinander verbundene Kettenglieder (6) aufweist sowie an jeder zweiten gelenkigen Verbindung von Kettengliedern (6) je einen Gelenkbolzen (30) und den anderen gelenkigen Verbindungen zugeordnete Steuerrollen (12), wobei mindestens durch den Einstellbereich (B) die Gelenkbolzen (30) mit den Halteelementen im Eingriff sind und die Steuerrollen (12) durch entlang einer Kulisse (11) zur Steuerung des Stauchungsgrades der Einstellkette (5) geführt sind.

4. Fördervorrichtung nach einem der Ansprüche 1 bis 3, **dadurch gekennzeichnet, dass** das Steuermittel derart ausgestaltet ist, dass der Stauchgrad der Einstellkette (5) in Förderrichtung (F) vor und nach dem Einstellbereich (B) dem Minimalabstand der Halteelemente (2) entspricht.

5. Fördervorrichtung nach Anspruch 4, **dadurch gekennzeichnet, dass** die Einstellkette (5) passiv umlaufend ist und dass Antriebsmittel zur gestossenen Förderung der Halteelemente (2) durch den Einstellbereich (B) vorgesehen sind.

6. Fördervorrichtung nach Anspruch 4, **dadurch gekennzeichnet, dass** die Einstellkette (5) angetrieben ist und dass der Schienenstrang (1) in Förderrichtung vor und nach dem Einstellbereich (B) derart abfallend ist, dass die Halteelemente (2) durch die Schwerkraft gefördert werden.

7. Fördervorrichtung nach einem der Ansprüche 1 bis 6, **dadurch gekennzeichnet, dass** das Steuermittel für eine Stauchungsgrad-Verkleinerung auf einen einzigen, vorgegebenen Stauchgrad ausgestaltet ist.

8. Fördervorrichtung nach Anspruch 7, **dadurch gekennzeichnet, dass** die Umlaufbahn der Einstellkette (5) im wesentlichen quer zur Förderrichtung (F) verschiebbar und dadurch der Eingriff mit den Halteelementen (2) aktivierbar und deaktivierbar ist.

9. Fördervorrichtung nach einem der Ansprüche 1 bis 6, **dadurch gekennzeichnet, dass** das Steuermittel für eine Stauchungsgrad-Verkleinerung auf eine Mehrzahl von vorgegebenen Stauchungsgraden ausgestaltet ist und dass die Vorrichtung ferner Kompensationsmittel zur Kompensation einer mit einer örtlichen Veränderung des vorgegebenen Stauchungsgrades verbundenen örtlichen Veränderung der Länge der Einstellkette (5) im Einstellbereich (B) aufweist.

10. Fördervorrichtung nach Anspruch 9, **dadurch gekennzeichnet, dass** das Kompensationsmittel Mittel zu einer kompensatorischen Anpassung der Länge der Umlaufbahn der Einstellkette (5) aufweist.

11. Fördervorrichtung nach Anspruch 10, **dadurch gekennzeichnet, dass** das Kompensationsmittel Mittel zur Verschiebung eines die Einstellkette (5) umlenkenden Kettenrades (10) aufweist.

12. Fördervorrichtung nach Anspruch 9, **dadurch gekennzeichnet, dass** das Kompensationsmittel Mittel zu einer kompensatorischen Anpassung des Stauchungsgrades der Einstellkette (5) in einem Kompensationsbereich (C) der Umlaufbahn der Einstellkette (5) aufweist.

13. Fördervorrichtung nach Anspruch 12, **dadurch gekennzeichnet, dass** zur Steuerung und/oder kompensatorischen Anpassung des Stauchzustandes der Einstellkette (5) die Kulisse (11) im Einstellbereich (B) und/oder im Kompensationsbereich (C) verschiebbar, deformierbar oder auswechselbar ist.

14. Fördervorrichtung nach Anspruch 12, **dadurch gekennzeichnet, dass** zur Steuerung und/oder kompensatorischen Anpassung des Stauchzustandes der Einstellkette (5) im Einstellbereich (B) und/oder im Kompensationsbereich (C) ein Paar von angetriebenen und mit der Einstellkette (5) in Eingriff stehenden Steuerrädern (50, 51, 50', 51') vorgesehen ist, wobei in jedem Paar das eine der Steuerräder (50, 50') ortsfest angeordnet und das andere der Steuerräder (51, 51') entlang der Umlaufbahn der Einstellkette (5) verschiebbar ist.

15. Fördervorrichtung nach Anspruch 14, **dadurch gekennzeichnet, dass** die Funktion des ortsfesten Steuerrades (50, 50') von einem die Einstellkette (5) umlenkenden und angetriebenen Kettenrad (9) übernommen wird.

16. Fördervorrichtung nach Anspruch 13 oder 14, **dadurch gekennzeichnet, dass** der Einstellbereich (B) und der Kompensationsbereich (C) unmittelbar nebeneinander angeordnet sind und dass die Funktion der beiden verschiebbaren Steuerräder (51, 51') von nur einem verschiebbaren Steuerrad übernommen wird, das zwischen den stationären Steuerrädern (50, 50') angeordnet ist.

17. Verwendung einer Fördervorrichtung nach einem der Ansprüche 1 bis 16 für die Förderung von Druckprodukten.

18. Verwendung einer Fördervorrichtung nach einem der Ansprüche 1 bis 16 für die Förderung und wahlweise Bearbeitung von Druckprodukten.

## Claims

1. Conveying device for gripped conveyance of individual objects (23) in a conveying direction (F), which conveying device comprises a rail track (1) and a plurality of holding elements (2) being movable substantially independently of one another along the rail track, wherein the holding elements (2) are designed in such a manner, that in pushed operation they have a defined minimum spacing between one another, **characterized in that** the device further comprises an adjusting chain (5) which is circulating along a circulating track and whose compression is variable, wherein, at least within an adjustment zone (B), the circulating track of the adjusting chain (5) runs parallel to the rail track (1) and the adjusting chain (5) is in engagement with holding elements (2) conveyed along the rail track (1) and that within the adjustment zone (B) a control means for locally reducing the compression of the adjusting chain (5) is provided.

2. Conveying device according to claim 1, **characterized in that** the adjustment chain (5) comprises chain links (6) connected to one another in an articulated manner, wherein guide rollers (7.1) or guide roller groups and control rollers (12) are alternatingly assigned to the articulated joints of the chain links (6) and for controlling compression of the adjustment chain (5) at least through the adjustment zone, the guide rollers (7.1) are guided along a circular guideway (8) and the control rollers (12) along a cam (11), and that driving means parts for driving the holding elements (2) are located on the articulated joints guided along the circular guideway (8).

3. Conveying device according to claim 1, **characterized in that** the adjusting chain (5) comprises chain links (6) connected to one another in an articulated manner, a hinge pin (30) each arranged on every second articulated joint of chain links (6) and control rollers (12) assigned to the other articulated joints, wherein for controlling compression of the adjusting chain (5) at least through the adjustment zone (B) the hinge pins (30) are in engagement with the holding elements (2) and the control rollers (12) are guided along a cam (11).

4. Conveying device according to one of claims 1 to 3, **characterized in that** the control means are designed in such a way, that compression of the adjusting chain (5) upstream and downstream of the adjustment zone (B) corresponds to the minimum spacing of the holding elements (2).

5. Conveying device according to claim 4, **characterized in that** the adjusting chain (5) circulates passively and that driving means are provided for conveying the holding elements (2) in a pushed manner through the adjustment zone (B).

6. Conveying device according to claim 4, **characterized in that** the adjusting chain (5) is driven and that the rail track (1) is sloping downwards upstream and downstream of the adjustment zone (B) in such a manner, that the holding elements (2) are driven by the force of gravity.

7. Conveying device according to one of claims 1 to 6, **characterized in that** the control means for reducing compression of the adjusting chain (5) is designed for a sole, predefined compression.

8. Conveying device according to claim 7, **characterized in that** for activating and de-activating engagement with the holding elements (2), the circulating track of the adjusting chain (5) is displaceable substantially perpendicular to the conveying direction (F).

9. Conveying device according to one of claims 1 to 6, **characterized in that** the control means for reducing compression of the adjusting chain (5) is designed for a plurality of predefined degrees of compression and that the device further comprises compensating means for compensating a local change in length of the adjusting chain (5) in the adjustment zone (B) caused by the local change of chain compression.

10. Conveying device according to claim 9, **characterized in that** the compensating means comprises means for adapting the length of the circulation track of the adjusting chain (5).

11. Conveying device according to claim 10, **characterized in that** the compensating means comprises means for displacing a chain wheel (10) deflecting the adjusting chain (5).

12. Conveying device according to claim 9, **characterized in that** the compensating means comprises means for adapting compression of the adjusting chain (5) in a compensation zone (C) of the circulating track of the adjusting chain (5).

13. Conveying device according to claim 12, **characterized in that** for controlling and/or compensatory adaptation of the compression of the adjusting chain (5) the cam (11) in the adjustment zone and/or in the compensation zone (C) is displaceable, deformable or interchangeable.

14. Conveying device according to claim 12, **characterized in that** for controlling and/or compensatory adaptation of the compression of the adjusting chain (5) a pair of driven control wheels (50, 51, 50', 51') in engagement with the adjusting chain (5) is provided in the adjustment zone (5) and/or in the compensation zone (C), wherein in every pair one of the control wheels (50, 51) is arranged positionally fixed and the other one of the control wheels (51, 51') is displaceable along the circulating track of the adjusting chain (5).

15. Conveying device according to claim 14, **characterized in that** the function of the positionally fixed control wheel (50, 50') is taken over by a driven chain wheel (9) deflecting the adjusting chain (5).

16. Conveying device according to claim 13 or 14, **characterized in that** the adjustment zone (b) and the compensation zone (C) are located immediately adjacent to one another and that the function of the two displaceable control wheels (51, 51') is taken over by only one displaceable control wheel, which is located between the stationary control wheels (50, 50').

17. Use of a conveying device according to one of the claims 1 to 16 for conveying printed products.

18. Use of a conveying device according to one of claims 1 to 16 for conveying and selectively processing printed products.

## Revendications

1. Dispositif de transport pour le transport soutenu d'objets (23) individuels dans une direction de transport (F), lequel dispositif de transport présente un tronçon de rail (1) et une pluralité d'éléments de maintien (2) qui peuvent être déplacés de manière essentiellement indépendante les uns des autres le long du tronçon de rail (1), les éléments de maintien (25) étant configurés de telle sorte qu'ils présentent les uns par rapport aux autres une distance minimale définie lorsqu'ils travaillent à l'état replié, **caractérisé en ce que** le dispositif présente en outre une chaîne sans fin de réglage (5) qui entoure un parcours fermé avec un degré de compactage variable, le parcours fermé de la chaîne de réglage (5) s'étendant parallèlement au tronçon de rail (1) au moins dans une zone de réglage (B), la chaîne de réglage (5) engageant des éléments de maintien (2) transportés le long du tronçon en rail (1), et **en ce qu'**un moyen de commande pour diminuer localement le degré de compactage de la chaîne de réglage (5) est prévu dans la zone de réglage (B).

2. Dispositif de transport selon la revendication 1, **caractérisé en ce que** la chaîne de réglage (5) présente des éléments de chaîne (6) reliés les uns aux autres de manière articulée, des galets de guidage (7.1) ou des groupes de galets de guidage et des galets de commande (12) étant associés en alternance aux liaisons articulées des éléments de chaîne (6), tandis qu'au moins dans la zone de réglage (B), les galets de guidage (7.1) sont guidés le long d'un guide périphérique (8) et les galets de commande (12) le long d'une glissière (11) pour commander le degré de compactage de la chaîne de réglage (5), et **en ce que** des pièces d'entraînement pour l'entraînement d'éléments de maintien (2) sont disposées sur les liaisons articulées guidées le long du guide périphérique (8).

3. Dispositif de transport selon la revendication 1, **caractérisé en ce que** la chaîne de réglage (5) présente des éléments de chaîne (6) reliés les uns aux autres de manière articulée ainsi que, sur une liaison articulée entre deux d'éléments de chaîne (6), un boulon d'articulation (30) et des galets de commande (12) associés aux autres liaison articulées, les boulons d'articulation (30) s'engageant sur les éléments de maintien au moins dans la zone de réglage (B) et les galets de commande (12) étant guidés le long d'une glissière (11) pour commander le degré de compactage de la chaîne de réglage (5).

4. Dispositif de transport selon l'une des revendications 1 à 3, **caractérisé en ce que** le moyen de commande est configuré de telle sorte que le degré de compactage de la chaîne de réglage (5) correspond à la distance minimale entre les éléments de maintien (2) en amont et en aval de la zone de réglage (B) dans la direction de transport (F).

5. Dispositif de transport selon la revendication 4, **caractérisé en ce que** la chaîne de réglage (5) tourne de manière passive et **en ce que** des moyens d'entraînement sont prévus pour transporter les éléments de maintien (2) à l'état replié le long de la zone de réglage (B).

6. Dispositif de transport selon la revendication 4, **caractérisé en ce que** la chaîne de réglage (5) est entraînée et **en ce que** le tronçon de rail (1) descend en amont et en aval de la zone de réglage (B) dans la direction du transport de telle sorte que les éléments de maintien (2) soient transportés par gravité.

7. Dispositif de transport selon l'une des revendications 1 à 6, **caractérisé en ce que** le moyen de commande de la diminution du degré de compactage est configuré pour un seul degré de compactage prédéterminé.

8. Dispositif de transport selon la revendication 7, **caractérisé en ce que** le parcours fermé de la chaîne de réglage (5) peut coulisser essentiellement transversalement par rapport à la direction de transport (F) et qu'ainsi l'engagement sur les éléments de maintien (2) peut être activé ou désactivé.

9. Dispositif de transport selon l'une des revendications 1 à 16, **caractérisé en ce que** le moyen de commande pour une diminution du degré de compactage est configuré pour une pluralité de degrés de compactage prédéterminés, et **en ce que** le dispositif présente en outre des moyens de compensation pour la compensation d'une modification locale, associée à une modification locale du degré prédéterminé de compactage, de la longueur de la chaîne de réglage (5) dans la zone de réglage (B).

10. Dispositif de transport selon la revendication 9, **caractérisé en ce que** les moyens de compensation présentent des moyens permettant une adaptation compensatoire de la longueur du parcours fermé de la chaîne de réglage (5).

11. Dispositif de transport selon la revendication 10, **caractérisé en ce que** les moyens de compensation présentent des moyens pour déplacer une roue de chaîne (10) qui assure le renvoi de la chaîne de réglage (5).

12. Dispositif de transport selon la revendication 9, **caractérisé en ce que** les moyens de compensation présentent des moyens pour réaliser une adaptation compensatoire du degré de compactage de la chaîne de réglage (5) dans une plage de compensation (C) du parcours fermé de la chaîne de réglage (5).

13. Dispositif de transport selon la revendication 12, **caractérisé en ce que** pour la commande et/ou l'adaptation compensatoire de l'état de compactage de la chaîne de réglage (5), la glissière (11) prévue dans la zone de réglage (B) et/ou dans la zone de compensation (C) peut être déplacée, déformée ou remplacée.

14. Dispositif de transport selon la revendication 12, **caractérisé en ce que** pour la commande et/ou l'adaptation compensatoire de l'état de compactage de la chaîne de réglage (5), une paire de roues de commande (50, 51, 50', 51') entraînées et engagées sur la chaîne de réglage (5) est prévue dans la plage de réglage (B) et/ou dans la plage de compensation (C), l'une des roues de commande (50, 50') de chaque paire étant disposée fixe et l'autre roue de commande (51, 51') pouvant être déplacée le long du parcours fermé de la chaîne de réglage (5).

15. Dispositif de transport selon la revendication 14, **caractérisé en ce que** la fonction de la roue de commande fixe (50, 50') est assurée par une roue de chaîne (9) qui assure le renvoi de la chaîne de réglage (5) et qui est entraînée.

16. Dispositif de transport selon la revendication 13 ou 14, **caractérisé en ce que** la plage de réglage (B) et la plage de compensation (C) sont disposées directement l'une à côté de l'autre et **en ce que** la fonction des deux roues de commande (51, 51') déplaçables est assurée par une seule roue de commande déplaçable qui est disposée entre les roues de commande stationnaires (50, 50').

17. Utilisation d'un dispositif de transport selon l'une des revendications 1 à 16, pour le transport de produits imprimés.

18. Utilisation d'un dispositif de transport selon l'une des revendications 1 à 16, pour le transport et le traitement sélectif de produits imprimés.
